# EUROPÄISCHE PATENTSCHRIFT

(11) **EP 1 301 957 B1**
(45) Veröffentlichungstag und Bekanntmachung des Hinweises auf die Patenterteilung: **30.04.2008**
(21) Anmeldenummer: 01953860.2
(22) Anmeldetag: 29.06.2001
(51) Int. Cl.: H01M 8/02

(54) **ALUMINIUMHALTIGER INTERKONNEKTOR FÜR BRENNSTOFFZELLEN**
ALUMINOUS INTERCONNECTOR FOR FUEL CELLS
INTERCONNECTEUR A BASE D'ALUMINIUM POUR CELLULES A COMBUSTIBLE

(30) Priorität: 12.07.2000 DE 10033897
(43) Veröffentlichungstag der Anmeldung: 16.04.2003
(73) Patentinhaber: Forschungszentrum Jülich GmbH, 52425 Jülich (DE)
(72) Erfinder: MEULENBERG, Wilhelm, Albert, NL-6294 AA Vijlen (NL); BRAM, Martin, 52428 Jülich (DE); BUCHKREMER, Hans, Peter, 52525 Heinsberg (DE)
(86) Internationale Anmeldenummer: PCT/DE2001/002483
(87) Internationale Veröffentlichungsnummer: WO 2002/005369

(56) Entgegenhaltungen:
- EP-A- 0 889 536
- DE-A- 4 016 157
- US-A- 5 460 897
- PATENT ABSTRACTS OF JAPAN vol. 018, no. 047 (E-1496), 25. Januar 1994 (1994-01-25) & JP 05 275089 A (TOKYO GAS CO LTD), 22. Oktober 1993 (1993-10-22)
- PATENT ABSTRACTS OF JAPAN vol. 018, no. 277 (E-1554), 26. Mai 1994 (1994-05-26) & JP 06 052868 A (SUMITOMO SPECIAL METALS CO LTD), 25. Februar 1994 (1994-02-25)

## Beschreibung

Die Erfindung bezieht sich auf einen aluminiumhaltigen Interkonnektor für Elektroden von Brennstoffzellen.

Eine Brennstoffzelle weist eine Kathode, einen Elektrolyten sowie eine Anode auf. Der Kathode wird ein Oxidationsmittel, z. B. Luft und der Anode wird ein Brennstoff, z. B. Wasserstoff zugeführt.

Verschiedene Brennstoffzellentypen sind bekannt, beispielsweise die SOFC-Brennstoffzelle aus der Druckschrift DE 44 30 958 C1 sowie die PEM-Brennstoffzelle aus der Druckschrift DE 195 31 852 C1.

Die SOFC-Brennstoffzelle wird auch Hochtemperaturbrennstoffzelle genannt, da ihre Betriebstemperatur bis zu 1000 °C betragen kann. An der Kathode einer Hochtemperaturbrennstoffzelle bilden sich in Anwesenheit des Oxidationsmittels Sauerstoffionen. Die Sauerstoffionen passieren den Elektrolyten und rekombinieren auf der Anodenseite mit dem vom Brennstoff stammenden Wasserstoff zu Wasser. Mit der Rekombination werden Elektronen freigesetzt und so elektrische Energie erzeugt.

Mehrere Brennstoffzellen werden in der Regel zur Erzielung großer elektrischer Leistungen durch verbindende

Elemente elektrisch und mechanisch durch Interkonnektoren miteinander verbunden. Ein Beispiel für ein verbindendes Element stellt die bipolare Platte dar. Mittels bipolarer Platten entstehen übereinander gestapelte, elektrisch in Serie geschaltete Brennstoffzellen. Diese Anordnung wird Brennstoffzellenstapel genannt. Die Brennstoffzellenstapel bestehen aus den bipolaren Platten und den Elektroden-Elektrolyt-Einheiten.

Interkonnektoren besitzen neben den elektrischen und mechanischen Eigenschaften regelmäßig auch Gasverteilerstrukturen. Bei der bipolaren Platte wird dies durch Stege mit Elektrodenkontakt realisiert, die die Gaskanäle zur Versorgung der Elektroden voneinander trennen (DE 44 10 711 C1). Gasverteilerstrukturen bewirken, daß die Betriebsmittel gleichmäßig in den Elektrodenräumen (Räume in denen sich die Elektroden befinden) verteilt werden.

Aus JP 05 275 089 A ist ein Interkonnektor mit Kontaktflächen und Gasverteilerstrukturen für Elektroden von Hochtemperatur-Brennstoffzellen bekannt. Der Interkonnektor besteht aus einer Nickelplatte, in dessen Oberfläche 0,1 bis 20 Gew.-% eines Metalls (z. B. Aluminium, Cer, Yttrium, Lithium o. ä.) legiert sind.

Nachteilig können bei Brennstoffzellen und Brennstoffzellenstapeln folgende Probleme auftreten:
- Metallische bipolare Platten mit einem hohen Chromgehalt bilden leitende Chromoxid-Deckschichten aus; im Betrieb kommt es durch Abdampfen von Chrom zu Alterungserscheinungen innerhalb der Brennstoffzelle.
- Metallische bipolare Platten mit hohem Aluminiumgehalt bilden Al₂O₃-Deckschichten aus, die nachteilig wie ein elektrischer Isolator wirken.
- Das Stapeln mehrerer Brennstoffzellen mittels bipolarer Platten geschieht durch einen Fügeprozeß. Dabei werden die Brennstoffzellen unter Druck zusammengefügt. Beim Fügeprozeß können sich zwischen den bekannten starren bipolaren Platten und den Elektroden-Elektrolyt-Einheiten schlecht leitende Kontaktpunkte ergeben. Diese beruhen u.a. auf Fertigungstoleranzen bei der Herstellung von bipolaren Platten bzw. Elektroden-Elektrolyt-Einheiten.
- Bei zyklischer Temperaturbelastung können Wärmespannungen auftreten; diese resultieren aus der unterschiedlichen Ausdehnung der verwendeten Materialien im Betrieb.

Aufgabe der Erfindung ist es, einen Brennstoffzellenstapel mit Hochtemperaturbrennstoffzellen zu schaffen, der eine langzeitstabile Kontaktierung der Anode gewährleistet. Ein Verfahren zur Herstellung eines solchen Brennstoffzellenstapels wird angegeben.

Die Aufgabe wird durch einen Interkonnektor nach Anspruch 1 gelöst. Der Interkonnektor ist aluminiumhaltig und mit Kontaktflächen und Gasverteilerstrukturen für Elektroden von Hochtemperaturbrennstoffzellen ausgestattet. Ferner ist mindestens eine Nickelfolie mit den Kontaktflächen des Interkonnektors durch Legierungsbildung verbunden. Dadurch liegen an der Grenzfläche zwischen den Kontaktflächen des Interkonnektors und der Nickelfolie Nickel-Aluminium-Legierungen vor. Es kann sich hierbei z. B. um Nickelaluminide (z.B. NiAl, Ni-Al₂, Ni₃Al) handeln. Solche Legierungen bieten als Kontaktschicht in Brennstoffzellen folgende Vorteile:
- Nickel-Aluminium-Legierungen wirken als Diffusionsbarriere für Legierungsbestandteile des Interkonnektors und vermeiden so die Bildung schlecht leitender Korrosionsprodukte (z. B. Aluminiumoxid) beispielsweise an der Oberfläche eines Anodeninterkonnektors.
- Nickel-Aluminium-Legierungen sind hochtemperaturbeständig (z. B. Schmelzpunkt von NiAl: 1638 °C).
- Nickel-Aluminium-Legierungen besitzen eine ausreichende elektrische Leitfähigkeit.
- Geringe Material- und Verarbeitungskosten.

In einer vorteilhaften Ausgestaltung werden die Kontaktflächen durch Stege gebildet, die Gaskanäle des Interkonnektors voneinander trennen (Anspruch 2). Der Interkonnektor ist dann als bipolare Platte ausgeführt, dessen Stege zumindest teilweise Nickel-Aluminium-Legierungen aufweisen.

Die Ansprüche 3-5 betreffen die Form der Folie(n) und damit die Form der Nickel-Aluminium-Legierungen, die auf den Kontaktflächen des Interkonnektors vorliegen. Es kann eine lochblechförmige Nickelfolie (Anspruch 3) mit den Kontaktflächen des Interkonnektors durch Legierungsbildung verbunden sein, deren Öffnungen auf den Gaskanälen des Interkonnektors liegen. Dadurch wird der Transport von Brennstoffen bis an die Elektroden der Brennstoffzelle gewährleistet.

Es können aber auch streifenförmige (Anspruch 4) bzw. punktförmige (Anspruch 5) Nickelfolien mit den Kontaktflächen des Interkonnektors durch Legierungsbildung verbunden sein. Die Kontaktflächen des Interkonnektors können genauso breit wie die Nickelfolien sein. Die Kontaktflächen können aber auch breiter als die Folien sein.

Vorteilhaft umfaßt eine Hochtemperaturbrennstoffzelle einen solchen Interkonnektor, wobei die Kontaktflächen des Interkonnektors die Anode der Hochtemperaturbrennstoffzelle kontaktieren (Anspruch 6). Durch die Eigenschaften der Nickel-Aluminium-Legierungen, wie Hochtemperaturbeständigkeit, wird eine langzeitstabile Kontaktierung gewährleistet. Daraus folgert, daß durch die Nickel-Aluminium-Legierungen auf der Anodenseite des Interkonnektors eine Verringerung des Kontaktwiderstands in der Hochtemperaturbrennstoffzelle erzielt wird, da die Bildung isolierender Aluminiumoxidschichten vermieden wird. Handelt es sich bei der Ausführung des Interkonnektors um eine bipolare Platte, so liegen die Nickel-Aluminium-Legierungen auf den Stegen mit Elektrodenkontakt vor, wobei die Stege mehr oder weniger vollständig mit den Nickel-Aluminium-Legierungen bedeckt sein können.

In einer weiteren Ausgestaltung der Erfindung ist zwischen der Anode und dem Interkonnektor ein elastisches Nickelnetz angeordnet (Anspruch 7). Dieses Nickelnetz dient als zusätzliches Mittel dazu, den elektrischen Kontakt zwischen der Anode und dem Interkonnektor über die Gitterpunkte des Netzes gleichmäßig zu gewährleisten und somit die oben genannten Fertigungstoleranzen des Interkonnektors bzw. der Anode auszugleichen.

Ein Brennstoffzellenstapel umfaßt mindestens zwei solcher Hochtemperaturbrennstoffzellen (Anspruch 8). Dadurch werden höhere Leistungen erzielt.

Ein Verfahren zur Herstellung eines Interkonnektors gemäß den Ansprüchen 1-5 ist in Anspruch 9 angegeben. Mindestens eine Nickelfolie wird auf die Kontaktflächen eines aluminiumhaltigen Interkonnektors aufgebracht. Anschließend erfolgt eine Wärmebehandlung, insbesondere ein Heißpressverfahren unter Bildung von Nickel-Aluminium-Legierungen (Anspruch 9). Die Nickelfolie besteht aus 99%-igem Nickel und es entstehen NiAl, NiAl₂, Ni₃Al und weitere Legierungen. Ist die Folie lochblechförmig ausgestaltet, so können vorher die Öffnungen auf einfache Weise aus der Nickelfolie herausgestanzt worden sein. Es hat sich gezeigt, daß Heißpressverfahren bis 1150 °C besonders gut geeignet sind, langzeitstabile Nickel-Aluminium-Legierungen zu erzeugen. Allerdings kommen auch Schweißverfahren unter einer Schutzgasatmosphäre sowie bedingt auch Plasmaspritzverfahren in Betracht.

Eine weitere Möglichkeit zur Erzeugung von Nickel-Aluminium-Legierungen besteht unter einer Verwendung einer galvanischen Vernickelung. Anschließend erfolgt eine Glühung der vernickelten Oberflächen im Vakuum unter Bildung von Nickel-Aluminium-Legierungen (Anspruch 10). Der Vorteil dieses Verfahrens besteht darin, daß große Oberflächen auf diese Weise mit Nickel-Aluminium-Legierungen versehen werden können.

Mit solchen Verfahren ist es vorstellbar in Ausgestaltung der Erfindung eine Brennstoffzelle oder einen Brennstoffzellenstapel zu bilden (Anspruch 11).

Im Folgenden wird die Erfindung anhand der Beschreibung von Ausführungsbeispielen unter Bezugnahme auf die Figuren erläutert.

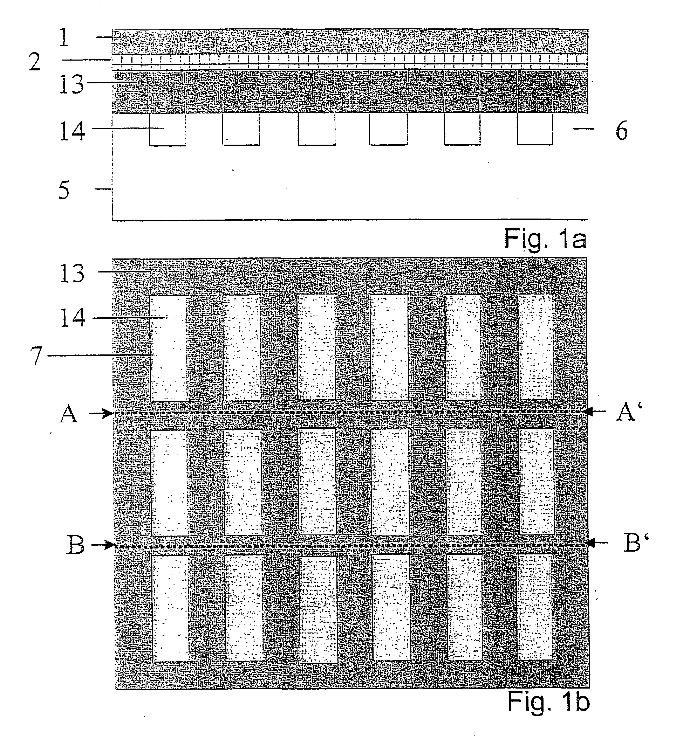

Figur 1a zeigt schematisch einen Querschnitt durch einen Teil einer Hochtemperaturbrennstoffzelle, bei der die Anode 1 über einen aluminiumhaltigen Interkonnektor 5, der als bipolare Platte ausgeführt ist, kontaktiert wird. Die bipolare Platte ist mit einer lochblechförmigen Nickelfolie 13 durch Legierungsbildung verbunden. Die Nickelfolie kann eine beliebige Stärke von 50-1000 µm und insbesondere von 500 µm besitzen. An der Grenzfläche zwischen bipolarer Platte 5 und Nickelfolie 13 liegen Nickel-Aluminium-Legierungen vor. Zwischen Anode 1 und bipolarer Platte 5 ist weiterhin ein Nickelnetz 2 angeordnet. Figur 1b zeigt in Aufsicht die Anordnung der lochblechförmigen Nickelfolie 13 auf der bipolaren Platte 5. Der Querschnitt der Fig. 1a kann in Fig. 1b in der Ebene A-A' oder B-B' durchgeführt worden sein. Figur 1b ist also eine Aufsicht des Gegenstands von Fig. 1a, allerdings ohne Nickelnetz 2 und Anode 1. Mit den Stegen 6 der bipolaren Platte 5 ist die lochblechförmige Nickelfolie 13 durch Legierungsbildung verbunden, so daß Nickel-Aluminium-Legierungen vorliegen. Fig. 1a weist insgesamt sieben Stege 6 auf von denen nur einer mit dem Bezugszeichen 6 versehen ist. Durch die sieben Stege 6 werden sechs Gaskanäle 14 voneinander getrennt. Die Öffnungen 7 der lochblechförmigen Nickelfolie 13 befinden sich auf den Gaskanälen 14 der bipolaren Platte 5. In Fig. 1b sind drei Reihen mit jeweils sechs Öffnungen 7 dargestellt. Die Öffnungen 7 sind in Form von rechteckigen Spalten ausgebildet, die in den Ebenen A-A' und B-B' voneinander getrennt sind. An den Stellen, an denen die lochblechförmige Nickelfolie 13 über den Gaskanälen 14 der bipolaren Platte 5 liegt, liegt demnach nur das Nickel der Folie, bzw. deren Öffnungen, vor. Diese Anordnung gewährleistet einerseits den Gasfluß von den Gaskanälen 14 der bipolaren Platte 5 durch die Öffnungen 7 der lochblechförmigen Nickelfolie 13 an die Anode 1. Durch die Lage der Öffnungen 7 über den Gaskanälen 14 werden im Betrieb bei hohen Temperaturen aber auch Wärmespannungen zwischen lochblechförmiger Nickelfolie 13 und bipolarer Platte 5 minimiert, die durch die unterschiedliche Ausdehnung der verschiedenen Materialien zustande kommen. Die Öffnungen 7 in der lochblechförmigen Nickelfolie 13 sind in Fig. 1b in den Ebenen A-A' und B-B' unterbrochen. Dies dient der Stabilität der Nickelfolie unter Betriebsbedingungen.

In Figur 1a befindet sich zwischen der Anode 1 und der lochblechförmigen Nickelfolie 13 ein elastisches Nickelnetz 2. Es hat eine Stärke von 250 µm und eine Maschenweite von 200 µm. Der Durchmesser der Drähte beträgt 125 µm. Das Nickelnetz 2 überbrückt mangelnden elektrischen Kontakt zwischen Anode 1 und den Stegen 6 der bipolaren Platte 5, der auf Grund von Fertigungstoleranzen bei der Herstellung der Materialien auftreten kann.

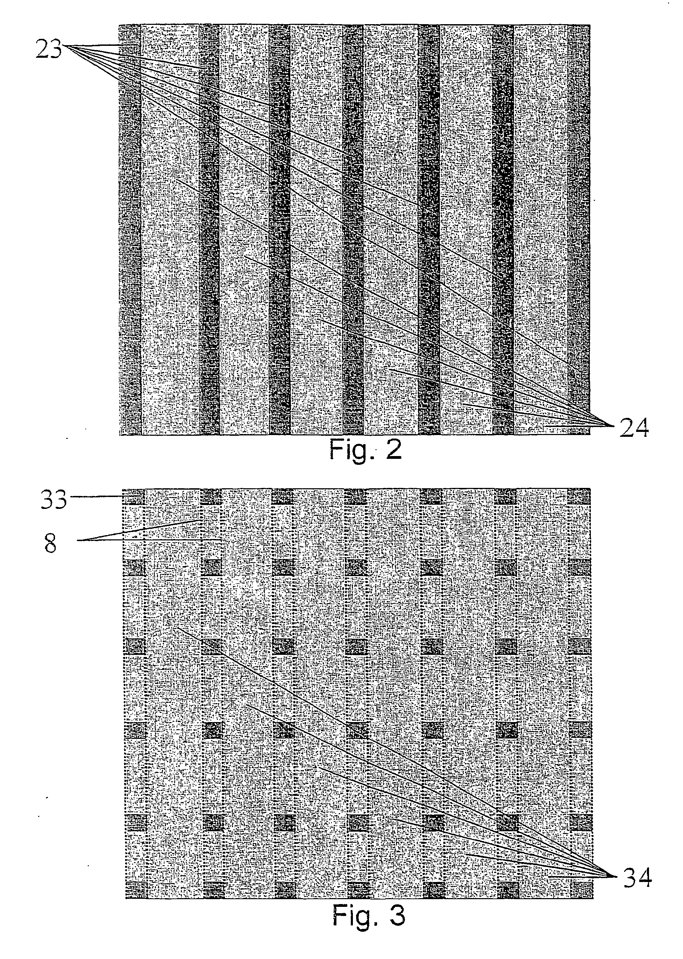

Figur 2 und 3 zeigen schematisch zwei weitere Ausführungsformen von Nickelfolien auf den Kontaktflächen eines Interkonnektors in Aufsicht. In Figur 2 sind sieben streifenförmige Nickelfolien 23 und in Fig. 3 insgesamt 42 punktförmige Nickelfolien 33 mit den Kontaktflächen des Interkonnektors durch Legierungsbildung verbunden. In Fig. 3 ist nur die punktförmige Nickelfolie oben links mit dem Bezugszeichen 33 versehen. In beiden Figuren verlaufen sechs Gasverteilerstrukturen 24 bzw. 34 vertikal zwischen den Nickelfolien 23 bzw. 33. In beiden Figuren entspricht die Breite der streifen- bzw. punktförmigen Nickelfolien 23, 33 der der Kontaktflächen des Interkonnektors. Die Breite der Kontaktflächen ist an Figur 3 durch die zwei, mit einem Bezugszeichen 8 versehenen, gestrichelten Linien angedeutet.

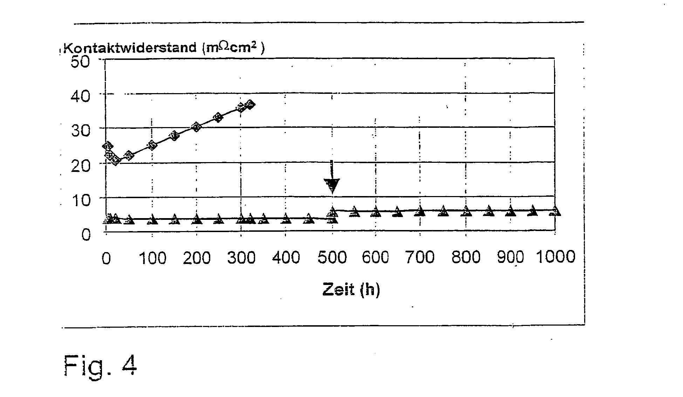

In Figur 4 sind Meßreihen des Kontaktwiderstands zwischen Anode und Interkonnektor zweier Hochtemperaturbrennstoffzellen in Abhängigkeit von der Betriebsdauer und einer Betriebstemperatur von 800 °C dargestellt. Der Interkonnektorstahl bestand jeweils aus einer Eisen-Chrom-Aluminium-Legierung mit ca. 5 % Aluminiumanteil (Werkstoff-Nr. 1.4767). Zwischen Anode und Interkonnektor befand sich ein Nickelnetz mit einer Stärke von 250 µm, einer Maschenweite von 200 µm und einem Durchmesser der Drähte von 125 µm. Die Kurve mit den Rautensymbolen bezieht sich auf einen Brennstoffzellenstapel, bei der der Interkonnektor keine Nickel-Aluminium-Legierungen aufwies. Die Kurve mit den Dreiecksymbolen bezieht sich auf einen Brennstoffzellenstapel, bei der der Interkonnektor mit einer Nickelfolie im Heißpressverfahren plattiert wurde und somit Nickel-Aluminium-Legierungen aufweist. Die Betriebstemperatur während des Heißpressverfahrens betrug 1150 °C für eine Dauer von 60 Minuten. Die Betriebstemperatur im Brennstoffzellenstapel betrug 800 °C. Der Kontaktwiderstand bei der Ausführung ohne Nickel-Aluminium-Legierungen stieg innerhalb von ca. 300 Betriebsstunden von anfänglich 25 auf 37 mΩ cm². Bei einer Brennstoffzelle mit einem Interkonnektor, der Nickel-Aluminium-Legierungen enthält, kam es auch nach 500 Betriebsstunden noch nicht zu einem Anstieg des Kontaktwiderstands an der Anode. Selbst nach Zyklierung der Betriebstemperatur, angedeutet durch den Pfeil in Figur 4, stieg der Kontaktwiderstand nur unwesentlich von 4 auf 6 mΩ cm² an und verblieb auch nach 1000 Betriebsstunden auf diesem niedrigen Wert. Die Nickel-Aluminium-Legierungen bewirkten also einen konstant niedrigen und damit langzeitstabilen Kontaktwiderstand. Nach 300 Betriebsstunden ist der Kontaktwiderstand einer solchen Hochtemperaturbrennstoffzelle im Vergleich zu einer Zelle ohne Nickel-Aluminium-Legierungen enthaltenden Interkonnektor demnach um fast 1000% erniedrigt.

## Patentansprüche

1. Aluminiumhaltiger Interkonnektor (5) mit Kontaktflächen und Gasverteilerstrukturen für Elektroden von Hochtemperaturbrennstoffzellen, wobei die Kontaktflächen zumindest teilweise Nickel-Aluminium-Legierungen aufweisen,
**dadurch gekennzeichnet, dass**
mindestens eine Nickelfolie mit den Kontaktflächen des Interkonnektors (5) durch Legierungsbildung verbunden ist.

2. Interkonnektor nach Anspruch 1,
**dadurch gekennzeichnet,**
**daß** die Kontaktflächen durch Stege (6) gebildet werden, die die Gaskanäle (14) des Interkonnektors (5) voneinander trennen.

3. Interkonnektor nach Anspruch 1 oder 2,
**dadurch gekennzeichnet,**
**daß** eine lochblechförmige Nickelfolie (13) mit den Kontaktflächen des Interkonnektors (5) durch Legierungsbildung verbunden ist, deren Öffnungen (7) auf den Gaskanälen (14) des Interkonnektors liegen.

4. Interkonnektor nach Anspruch 1 oder 2,
**dadurch gekennzeichnet,**
**daß** streifenförmige Nickelfolien (23) mit den Kontaktflächen des Interkonnektors (5) durch Legierungsbildung verbunden sind.

5. Interkonnektor nach Anspruch 1 oder 2,
**dadurch gekennzeichnet,**
**daß** punktförmige Nickelfolien (33) mit den Kontaktflächen des Interkonnektors (5) durch Legierungsbildung verbunden sind.

6. Hochtemperaturbrennstoffzelle, umfassend einen Interkonnektor nach einem der vorhergehenden Ansprüche, wobei die Kontaktflächen des Interkonnektors die Anode (1) der Hochtemperaturbrennstoffzelle kontaktieren.

7. Hochtemperaturbrennstoffzelle nach Anspruch 6,
**dadurch gekennzeichnet,**
**daß** zwischen der Anode (1) und dem Interkonnektor (5) ein elastisches Nickelnetz (2) angeordnet ist.

8. Brennstoffzellenstapel, umfassend mindestens zwei Hochtemperaturbrennstoffzellen nach einem der Ansprüche 6 oder 7.

9. Verfahren zur Herstellung eines Interkonnektors nach einem der Ansprüche 1 bis 5,
**gekennzeichnet durch** die Schritte:
- Mindestens eine Nickelfolie wird auf die Kontaktflächen eines aluminiumhaltigen Interkonnektors aufgebracht;
- es erfolgt eine Wärmebehandlung, insbesondere ein Heißpreßverfahren unter Bildung von Nickel-Aluminium-Legierungen.

10. Verfahren zur Herstellung eines Interkonnektors nach einem der Ansprüche 1 bis 5 unter Verwendung einer galvanischen Vernickelung,
**dadurch gekennzeichnet,**
**daß** eine Glühung des Interkonnektors im Vakuum unter Bildung von Nickel-Aluminium-Legierungen erfolgt.

11. Verfahren zur Herstellung einer Brennstoffzelle oder eines Brennstoffzellenstapels nach einem der Ansprüche 6 bis 8 mit einem Verfahren nach Anspruch 9 oder 10.

## Claims

1. Aluminous interconnector (5) with contact surfaces and gas distribution structures for the electrodes of high temperature fuel cells, in which the contact surfaces at least partially have nickel - aluminium alloys,
**characterised in that**
at least one nickel foil is connected to the contact surfaces of the interconnector (5) by alloy formation.

2. Interconnector according to claim 1,
**characterised in that**
the contact surfaces are formed by webs (6), which separate the gas channels (14) of the interconnector (5) from each other.

3. Interconnector according to claim 1 or 2,
**characterised in that**
a perforated plate shaped nickel foil (13) is connected to the contact surfaces of the interconnector (5) by alloy formation, the openings (7) of which are located on the gas channels (14) of the interconnector.

4. Interconnector according to claim 1 or 2,
**characterised in that**
the strip shaped nickel foils (23) are connected to the contact surfaces of the interconnector (5) by alloy formation.

5. Interconnector according to claim 1 or 2,
**characterised in that**
punctiform nickel foils (33) are connected to the contact surfaces of the interconnector (5) by alloy formation.

6. High temperature fuel cell, comprising an interconnector according to one of the preceding claims, in which the contact surfaces of the interconnector contact with the anode (1) of the high temperature fuel cell.

7. High temperature fuel cell according to claim 6,
**characterised in that**
a flexible nickel mesh (2) is arranged between the anode (1) and the interconnector (5).

8. Fuel cell stack, comprising at least two high temperature fuel cells according to one of claims 6 or 7.

9. Method for producing an interconnector according to one of claims 1 to 5, **characterised by** the steps:
- at least one nickel foil is applied to the contact surfaces of an aluminous interconnector;
- heat treatment is effected, particularly a hot press procedure with nickel - aluminium alloys being formed.

10. Method for producing an interconnector according to one of claims 1 to 5 using nickel electroplating,
**characterised in that**
an annealing of the interconnector is effected in a vacuum with nickel - aluminium alloys being formed.

11. Method for producing a fuel cell or a fuel cell stack according to one of claims 6 to 9 with a method according to claim 9 or 10.

## Revendications

1. Interconnecter ( 5 ) contenant de l'aluminium et ayant des surfaces de contact et des structures formant répartiteur de gaz pour des électrodes de piles à combustible à haute température, les surfaces de contact comportant au moins en partie des alliages de nickel et d'aluminium,
**caractérisé en ce que**
au moins une feuille de nickel est reliée par formation d'alliage aux surfaces de contact de l'interconnecteur ( 5 ).

2. Interconnecteur suivant la revendication 1,
**caractérisé**
**en ce que** les surfaces de contact sont formées par des nervures ( 6 ) qui séparent les uns des autres les canaux ( 14 ) pour du gaz de l'interconnecteur ( 5 ).

3. Interconnecteur suivant la revendication 1 ou 2,
**caractérisé**
**en ce qu'**une feuille ( 13 ) de nickel formant une tôle perforée est reliée par formation d'alliage aux surfaces de contact de l'interconnecteur ( 5 ), ces ouvertures ( 7 ) se trouvant sur les canaux ( 14 ) pour du gaz de l'interconnecteur.

4. Interconnecteur suivant la revendications 1 ou 2,
**caractérisé**
**en ce que** des feuilles ( 23 ) de nickel en forme de bande sont reliées par formation d'alliage aux surfaces de contact de l'interconnecteur ( 5 ).

5. Interconnecteur suivant la revendication 1 ou 2,
**caractérisé**
**en ce que** des feuilles ( 33 ) de nickel ponctuelles sont reliées par formation d'alliage aux surfaces de contact de l'interconnecteur ( 5 ).

6. Pile à combustible à haute température, comprenant un interconnecteur suivant l'une des revendications précédentes, les surfaces de contact de l'interconnecteur étant en contact avec les anodes ( 1 ) de la pile à combustible à haute température.

7. Pile à combustible à haute température suivant la revendication 6, **caractérisée en ce qu'**une toile ( 2 ) élastique de nickel est disposée entre l'anode ( 1 ) et l'interconnecteur ( 5 ).

8. Empilement de piles à combustible comprenant au moins deux piles à combustible à haute température suivant l'une des revendications 6 ou 7.

9. Procédé de fabrication d'un interconnecteur suivant l'une des revendications 1 à 5,
**caractérisé par** les stades :
- on dépose au moins une feuille de nickel sur les surfaces de contact d'un interconnecteur contenant de l'aluminium ;
- on effectue un traitement thermique, notamment un procédé de compression à chaud, avec formation d'alliages de nickel et d'aluminium.

10. Procédé de fabrication d'un interconnecteur suivant l'une des revendications 1 à 5, en utilisant un nickelage galvanique,
**caractérisé**
**en ce qu'**on porte au rouge l'interconnecteur sous vide avec formation d'alliages de nickel et d'aluminium.

11. Procédé de fabrication d'une pile à combustible ou d'un empilement de piles à combustible suivant l'une des revendications 6 à 8 par un procédé suivant la revendication 9 ou 10.
